# EUROPEAN PATENT APPLICATION

(11) **EP 4 492 704 A1**
(43) Date of publication of application: **15.01.2025**
(21) Application number: 23788531.4
(22) Date of filing: 05.04.2023
(51) Int. Cl.: H04B 7/06, H04W 76/16, H04B 1/3827, H04B 1/00, H04B 1/50, H04B 15/02, G06F 3/041

(54) **ELECTRONIC DEVICE AND METHOD FOR ADAPTIVELY SELECTING ANTENNA**

(30) Priority: 13.04.2022 KR 20220045810; 26.04.2022 KR 20220051699
(71) Applicant: Samsung Electronics Co., Ltd, Suwon-si, Gyeonggi-do 16677 (KR)
(72) Inventor: SON, Moonsoo, Suwon-si Gyeonggi-do 16677 (KR); PARK, Jeongwan, Suwon-si Gyeonggi-do 16677 (KR); SAKONG, Min, Suwon-si Gyeonggi-do 16677 (KR); SHIN, Dongryul, Suwon-si Gyeonggi-do 16677 (KR)
(74) Representative: HGF
(86) International application number: PCT/KR2023/004630
(87) International publication number: WO 2023/200179

(57) **Abstract**

The electronic device may comprise: a wireless communication circuit for supporting evolved-universal terrestrial radio access (E-UTRA)-new radio (NR)-dual connectivity (DC), and a first antenna for at least one first long-term evolution (LTE) frequency band; a second antenna for at least one second LTE frequency band and at least one first new radio (NR) frequency band; a third antenna for at least one second NR frequency band; an NR transmission/reception antenna for the at least one first NR frequency band and the at least one second NR frequency band; and a processor.

## Description

### [Technical Field]

The disclosure relates to an electronic device and a method for adaptively selecting an antenna for an New radio (NR) carrier.

### [Background Art]

An electronic device (e.g., a terminal or a user equipment (UE)) may perform wireless communication with a base station. Recently, electronic devices that perform 4G (4^{th} generation) communication and 5G (5^{th} generation) communication have also been commercialized.

### [Detailed Description of the Invention]

### [Technical Solution]

An electronic device according to an embodiment may include: a wireless communication circuitry for supporting EN (Evolved-Universal Terrestrial Radio Access (E-UTRA)-New Radio (NR))-DC (dual connectivity); a first antenna for at least one first Long-term evolution (LTE) frequency band; a second antenna for at least one second LTE frequency band and at least one first New radio (NR) frequency band; a third antenna for at least one second NR frequency band, an NR transmission/reception antenna for the at least one first NR frequency band and the at least one second NR frequency band; and a processor. The processor may control the wireless communication circuitry to identify an anchor antenna of the first antenna and the second antenna, based on a frequency band of an LTE carrier of the EN-DC, identify a frequency band of an NR carrier of the EN-DC, identify an additional antenna for transmitting a signal of the NR carrier of the EN-DC of the second antenna and the third antenna, based on the anchor antenna and the frequency band of the NR carrier of the EN-DC, and feed a signal of the NR carrier of the EN-DC to the NR transmission/reception antenna and the additional antenna.

A method performed by an electronic device according to an embodiment may include: identifying an anchor antenna of a first antenna and a second antenna based on a frequency band of an Long-term evolution (LTE) carrier of EN (Evolved-Universal Terrestrial Radio Access (E-UTRA)-New Radio (NR))-DC (dual connectivity); identifying a frequency band of an New radio (NR) carrier of the EN-DC; identifying an additional antenna for transmitting a signal of the NR carrier of the EN-DC of the second antenna and the third antenna, based on the anchor antenna and the frequency band of the NR carrier; and feeding a signal of the NR carrier of the EN-DC to an NR transmission/reception antenna and the additional antenna, wherein the first antenna supports at least one first LTE frequency band, wherein the second antenna supports at least one second LTE frequency band and at least one first NR frequency band, wherein the third antenna supports at least one second NR frequency band, and wherein the NR transmission/reception antenna supports the at least one first NR frequency band and the at least one second NR frequency band

### [Brief Description of the Drawings]

FIG. 1 is a block diagram of an electronic device in a network environment according to an embodiment.
FIG. 2 is a block diagram of an electronic device for supporting legacy network communication and 5G (5^{th} generation) network communication according to various embodiments.
FIG. 3 is a diagram illustrating an example wireless communication system for providing a network of legacy communication and/or 5G communication according to embodiments.
FIG. 4 illustrates an example of an antenna arrangement for EN-DC (Evolved universal terrestrial radio access-New radio dual-connectivity) of an electronic device according to embodiments.
FIGS. 5A, 5B, and 5C illustrate examples of antennas according to a frequency band of an LTE (long term evolution) carrier and a frequency band of an NR carrier according to embodiments.
FIG. 6 illustrates examples of communication modules and antennas for the EN-DC according to embodiments.
FIG. 7 illustrates an example operation flow of an electronic device for selecting an NR antenna of EN-DC according to embodiments.
FIG. 8 illustrates an example operation flow of an electronic device for selecting an NR antenna of EN-DC based on a frequency band of an LTE carrier and a frequency band of an NR carrier according to embodiments.
FIG. 9 illustrates an example of an external switch for transmitting an NR carrier signal of EN-DC according to embodiments.
FIG. 10 illustrates an example of a performance graph when using an additional antenna for an NR carrier of EN-DC according to embodiments.

### [Mode for Carrying out the Invention]

The terms used in the disclosure are merely used to better describe a certain embodiment and may not be intended to limit the scope of other embodiments. A singular expression may include a plural expression, unless the context clearly dictates otherwise. The terms used herein, including technical and scientific terms, may have the same meanings as those commonly understood by those skilled in the art to which the disclosure pertains. Terms defined in a general dictionary among the terms used in the disclosure may be interpreted as having the same or similar meaning as those in the context of the related art, and they are not to be construed in an ideal or overly formal sense, unless explicitly defined in the disclosure. In some cases, even the terms defined in the disclosure may not be interpreted to exclude embodiments of the disclosure.

In various examples of the disclosure described below, a hardware approach will be described as an example. However, since various embodiments of the disclosure may include a technology that utilizes both the hardware-based approach and the software-based approach, the various embodiments are not intended to exclude the software-based approach.

As used in the following description, terms related to multiple connectivity (e.g., dual connectivity (DC), MR (multi-RAT (radio technology))-DC, cell group, master cell group (MCG), secondary cell group (SCG)), terms referring to signals (e.g., reference signal, system information, control signal, message, data), terms referring to network entities (e.g., communication node, radio node, radio unit, network node, master node (MN), secondary node (SN), transmission/reception point (TRP), digital unit (DU), radio unit (RU), massive MIMO unit (MMU), or the like) are exemplified for convenience of description. Therefore, the disclosure is not limited to the terms to be described below, and other terms having equivalent technical meanings may be used therefor.

Further, throughout the disclosure, an expression such as e.g., `more than' or `less than' may be used to determine whether a specific condition is satisfied or fulfilled or not, but it is merely of a description for representing such an example and is not intended to exclude the meaning of `more than or equal to' or `less than or equal to'. A condition described as `more than or equal to' may be replaced with `more than', a condition described as `less than or equal to' may be replaced with `less than', and a condition described as `more than or equal to and less than' may be replaced with `more than and less than or equal to', respectively.

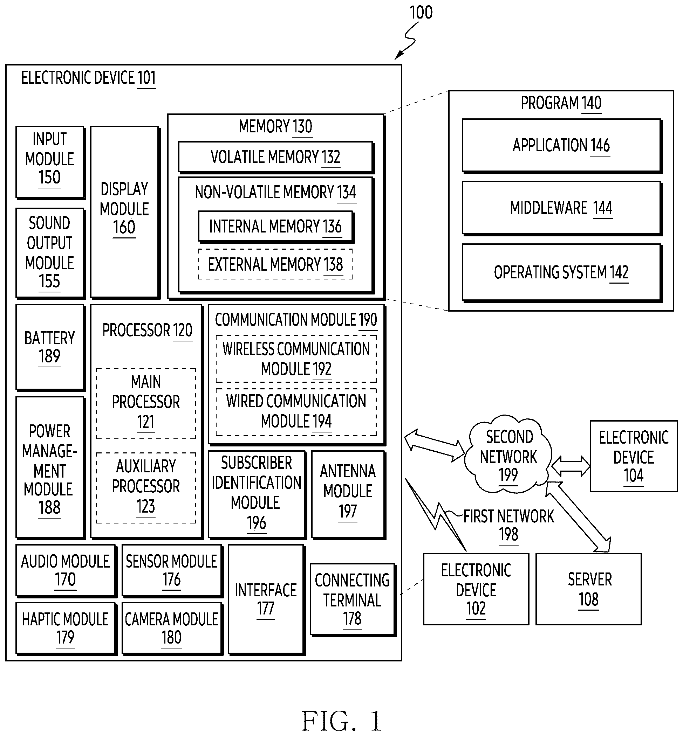

FIG. 1 is a block diagram of an electronic device 100 in a network environment 100 according to various embodiments.

Referring to FIG. 1, the electronic device 101 in the network environment 100 may communicate with an electronic device 102 via a first network 198 (e.g., a short-range wireless communication network), or at least one of an electronic device 104 or a server 108 via a second network 199 (e.g., a long-range wireless communication network). According to an embodiment, the electronic device 101 may communicate with the electronic device 104 via the server 108. According to an embodiment, the electronic device 101 may include a processor 120, memory 130, an input module 150, a sound output module 155, a display module 160, an audio module 170, a sensor module 176, an interface 177, a connecting terminal 178, a haptic module 179, a camera module 180, a power management module 188, a battery 189, a communication module 190, a subscriber identification module(SIM) 196, or an antenna module 197. In some embodiments, at least one of the components (e.g., the connecting terminal 178) may be omitted from the electronic device 101, or one or more other components may be added in the electronic device 101. In some embodiments, some of the components (e.g., the sensor module 176, the camera module 180, or the antenna module 197) may be implemented as a single component (e.g., the display module 160).

The processor 120 may execute, for example, software (e.g., a program 140) to control at least one other component (e.g., a hardware or software component) of the electronic device 101 coupled with the processor 120, and may perform various data processing or computation. According to one embodiment, as at least part of the data processing or computation, the processor 120 may store a command or data received from another component (e.g., the sensor module 176 or the communication module 190) in volatile memory 132, process the command or the data stored in the volatile memory 132, and store resulting data in non-volatile memory 134. According to an embodiment, the processor 120 may include a main processor 121 (e.g., a central processing unit (CPU) or an application processor (AP)), or an auxiliary processor 123 (e.g., a graphics processing unit (GPU), a neural processing unit (NPU), an image signal processor (ISP), a sensor hub processor, or a communication processor (CP)) that is operable independently from, or in conjunction with, the main processor 121. For example, when the electronic device 101 includes the main processor 121 and the auxiliary processor 123, the auxiliary processor 123 may be adapted to consume less power than the main processor 121, or to be specific to a specified function. The auxiliary processor 123 may be implemented as separate from, or as part of the main processor 121.

The auxiliary processor 123 may control at least some of functions or states related to at least one component (e.g., the display module 160, the sensor module 176, or the communication module 190) among the components of the electronic device 101, instead of the main processor 121 while the main processor 121 is in an inactive (e.g., sleep) state, or together with the main processor 121 while the main processor 121 is in an active state (e.g., executing an application). According to an embodiment, the auxiliary processor 123 (e.g., an image signal processor or a communication processor) may be implemented as part of another component (e.g., the camera module 180 or the communication module 190) functionally related to the auxiliary processor 123. According to an embodiment, the auxiliary processor 123 (e.g., the neural processing unit) may include a hardware structure specified for artificial intelligence model processing. An artificial intelligence model may be generated by machine learning. Such learning may be performed, e.g., by the electronic device 101 where the artificial intelligence is performed or via a separate server (e.g., the server 108). Learning algorithms may include, but are not limited to, e.g., supervised learning, unsupervised learning, semi-supervised learning, or reinforcement learning. The artificial intelligence model may include a plurality of artificial neural network layers. The artificial neural network may be a deep neural network (DNN), a convolutional neural network (CNN), a recurrent neural network (RNN), a restricted Boltzmann machine (RBM), a deep belief network (DBN), a bidirectional recurrent deep neural network (BRDNN), deep Q-network or a combination of two or more thereof but is not limited thereto. The artificial intelligence model may, additionally or alternatively, include a software structure other than the hardware structure.

The memory 130 may store various data used by at least one component (e.g., the processor 120 or the sensor module 176) of the electronic device 101. The various data may include, for example, software (e.g., the program 140) and input data or output data for a command related thereto. The memory 130 may include the volatile memory 132 or the non-volatile memory 134.

The program 140 may be stored in the memory 130 as software, and may include, for example, an operating system (OS) 142, middleware 144, or an application 146.

The input module 150 may receive a command or data to be used by another component (e.g., the processor 120) of the electronic device 101, from the outside (e.g., a user) of the electronic device 101. The input module 150 may include, for example, a microphone, a mouse, a keyboard, a key (e.g., a button), or a digital pen (e.g., a stylus pen).

The sound output module 155 may output sound signals to the outside of the electronic device 101. The sound output module 155 may include, for example, a speaker or a receiver. The speaker may be used for general purposes, such as playing multimedia or playing record. The receiver may be used for receiving incoming calls. According to an embodiment, the receiver may be implemented as separate from, or as part of the speaker.

The display module 160 may visually provide information to the outside (e.g., a user) of the electronic device 101. The display module 160 may include, for example, a display, a hologram device, or a projector and control circuitry to control a corresponding one of the display, hologram device, and projector. According to an embodiment, the display module 160 may include a touch sensor adapted to detect a touch, or a pressure sensor adapted to measure the intensity of force incurred by the touch.

The audio module 170 may convert a sound into an electrical signal and vice versa. According to an embodiment, the audio module 170 may obtain the sound via the input module 150, or output the sound via the sound output module 155 or a headphone of an external electronic device (e.g., an electronic device 102) directly (e.g., wiredly) or wirelessly coupled with the electronic device 101.

The sensor module 176 may detect an operational state (e.g., power or temperature) of the electronic device 101 or an environmental state (e.g., a state of a user) external to the electronic device 101, and then generate an electrical signal or data value corresponding to the detected state. According to an embodiment, the sensor module 176 may include, for example, a gesture sensor, a gyro sensor, an atmospheric pressure sensor, a magnetic sensor, an acceleration sensor, a grip sensor, a proximity sensor, a color sensor, an infrared (IR) sensor, a biometric sensor, a temperature sensor, a humidity sensor, or an illuminance sensor.

The interface 177 may support one or more specified protocols to be used for the electronic device 101 to be coupled with the external electronic device (e.g., the electronic device 102) directly (e.g., wiredly) or wirelessly. According to an embodiment, the interface 177 may include, for example, a high definition multimedia interface (HDMI), a universal serial bus (USB) interface, a secure digital (SD) card interface, or an audio interface.

A connecting terminal 178 may include a connector via which the electronic device 101 may be physically connected with the external electronic device (e.g., the electronic device 102). According to an embodiment, the connecting terminal 178 may include, for example, a HDMI connector, a USB connector, a SD card connector, or an audio connector (e.g., a headphone connector).

The haptic module 179 may convert an electrical signal into a mechanical stimulus (e.g., a vibration or a movement) or electrical stimulus which may be recognized by a user via his tactile sensation or kinesthetic sensation. According to an embodiment, the haptic module 179 may include, for example, a motor, a piezoelectric element, or an electric stimulator.

The camera module 180 may capture a still image or moving images. According to an embodiment, the camera module 180 may include one or more lenses, image sensors, image signal processors, or flashes.

The power management module 188 may manage power supplied to the electronic device 101. According to one embodiment, the power management module 188 may be implemented as at least part of, for example, a power management integrated circuit (PMIC).

The battery 189 may supply power to at least one component of the electronic device 101. According to an embodiment, the battery 189 may include, for example, a primary cell which is not rechargeable, a secondary cell which is rechargeable, or a fuel cell.

The communication module 190 may support establishing a direct (e.g., wired) communication channel or a wireless communication channel between the electronic device 101 and the external electronic device (e.g., the electronic device 102, the electronic device 104, or the server 108) and performing communication via the established communication channel. The communication module 190 may include one or more communication processors that are operable independently from the processor 120 (e.g., the application processor (AP)) and supports a direct (e.g., wired) communication or a wireless communication. According to an embodiment, the communication module 190 may include a wireless communication module 192 (e.g., a cellular communication module, a short-range wireless communication module, or a global navigation satellite system (GNSS) communication module) or a wired communication module 194 (e.g., a local area network (LAN) communication module or a power line communication (PLC) module). A corresponding one of these communication modules may communicate with the external electronic device via the first network 198 (e.g., a short-range communication network, such as Bluetooth^{™}, wireless-fidelity (Wi-Fi) direct, or infrared data association (IrDA)) or the second network 199 (e.g., a long-range communication network, such as a legacy cellular network, a 5G network, a next-generation communication network, the Internet, or a computer network (e.g., LAN or wide area network (WAN)). These various types of communication modules may be implemented as a single component (e.g., a single chip), or may be implemented as multi components (e.g., multi chips) separate from each other. The wireless communication module 192 may identify and authenticate the electronic device 101 in a communication network, such as the first network 198 or the second network 199, using subscriber information (e.g., international mobile subscriber identity (IMSI)) stored in the subscriber identification module 196.

The wireless communication module 192 may support a 5G network, after a 4G network, and next-generation communication technology, e.g., new radio (NR) access technology. The NR access technology may support enhanced mobile broadband (eMBB), massive machine type communications (mMTC), or ultra-reliable and low-latency communications (URLLC). The wireless communication module 192 may support a high-frequency band (e.g., the mmWave band) to achieve, e.g., a high data transmission rate. The wireless communication module 192 may support various technologies for securing performance on a high-frequency band, such as, e.g., beamforming, massive multiple-input and multiple-output (massive MIMO), full dimensional MIMO (FD-MIMO), array antenna, analog beam-forming, or large scale antenna. The wireless communication module 192 may support various requirements specified in the electronic device 101, an external electronic device (e.g., the electronic device 104), or a network system (e.g., the second network 199). According to an embodiment, the wireless communication module 192 may support a peak data rate (e.g., 20Gbps or more) for implementing eMBB, loss coverage (e.g., 164dB or less) for implementing mMTC, or U-plane latency (e.g., 0.5ms or less for each of downlink (DL) and uplink (UL), or a round trip of 1ms or less) for implementing URLLC.

The antenna module 197 may transmit or receive a signal or power to or from the outside (e.g., the external electronic device) of the electronic device 101. According to an embodiment, the antenna module 197 may include an antenna including a radiating element composed of a conductive material or a conductive pattern formed in or on a substrate (e.g., a printed circuit board (PCB)). According to an embodiment, the antenna module 197 may include a plurality of antennas (e.g., array antennas). In such a case, at least one antenna appropriate for a communication scheme used in the communication network, such as the first network 198 or the second network 199, may be selected, for example, by the communication module 190 (e.g., the wireless communication module 192) from the plurality of antennas. The signal or the power may then be transmitted or received between the communication module 190 and the external electronic device via the selected at least one antenna. According to an embodiment, another component (e.g., a radio frequency integrated circuit (RFIC)) other than the radiating element may be additionally formed as part of the antenna module 197.

According to various embodiments, the antenna module 197 may form a mmWave antenna module. According to an embodiment, the mmWave antenna module may include a printed circuit board, a RFIC disposed on a first surface (e.g., the bottom surface) of the printed circuit board, or adjacent to the first surface and capable of supporting a designated high-frequency band (e.g., the mmWave band), and a plurality of antennas (e.g., array antennas) disposed on a second surface (e.g., the top or a side surface) of the printed circuit board, or adjacent to the second surface and capable of transmitting or receiving signals of the designated high-frequency band.

At least some of the above-described components may be coupled mutually and communicate signals (e.g., commands or data) therebetween via an inter-peripheral communication scheme (e.g., a bus, general purpose input and output (GPIO), serial peripheral interface (SPI), or mobile industry processor interface (MIPI)).

According to an embodiment, commands or data may be transmitted or received between the electronic device 101 and the external electronic device 104 via the server 108 coupled with the second network 199. Each of the electronic devices 102 or 104 may be a device of a same type as, or a different type, from the electronic device 101. According to an embodiment, all or some of operations to be executed at the electronic device 101 may be executed at one or more of the external electronic devices 102, 104, or 108. For example, if the electronic device 101 should perform a function or a service automatically, or in response to a request from a user or another device, the electronic device 101, instead of, or in addition to, executing the function or the service, may request the one or more external electronic devices to perform at least part of the function or the service. The one or more external electronic devices receiving the request may perform the at least part of the function or the service requested, or an additional function or an additional service related to the request, and transfer an outcome of the performing to the electronic device 101. The electronic device 101 may provide the outcome, with or without further processing of the outcome, as at least part of a reply to the request. To that end, a cloud computing, distributed computing, mobile edge computing (MEC), or client-server computing technology may be used, for example. The electronic device 101 may provide ultra-low-latency services using, e.g., distributed computing or mobile edge computing. In another embodiment, the external electronic device 104 may include an internet-of-things (IoT) device. The server 108 may be an intelligent server using machine learning and/or a neural network. According to an embodiment, the external electronic device 104 or the server 108 may be included in the second network 199. The electronic device 101 may be applied to intelligent services (e.g., smart home, smart city, smart car, or healthcare) based on 5G communication technology or IoT-related technology.

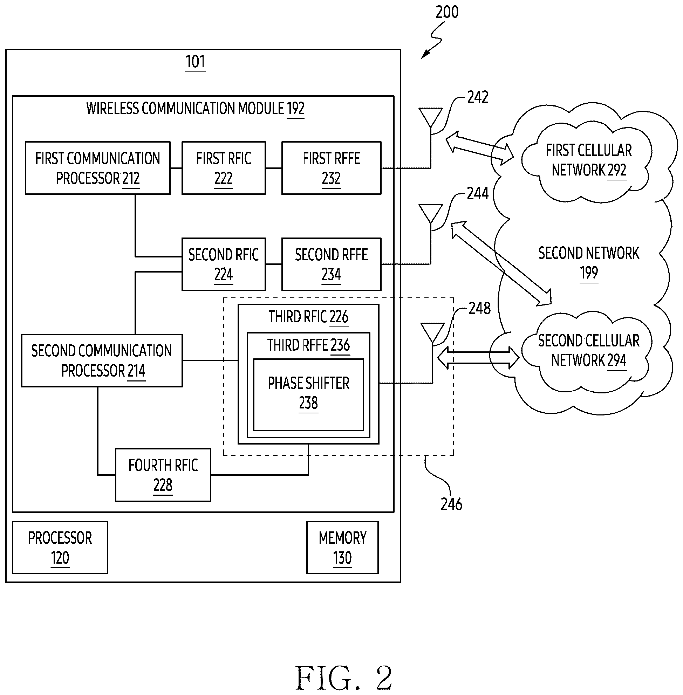

FIG. 2 is a block diagram 200 of the electronic device 101 for supporting legacy network communication and 5G network communication, according to various embodiments. Referring to FIG. 2, the electronic device 101 may include a first communication processor 212, a second communication processor 214, a first radio frequency integrated circuit (RFIC) 222, a second RFIC 224, and a third RFIC 226, a fourth RFIC 228, a first radio frequency front end (RFFE) 232, a second RFFE 234, a first antenna module 242, a second antenna module 244, and an antenna 248. The electronic device 101 may further include the processor 120 and the memory 130. The second network 199 may include a first cellular network 292 and a second cellular network 294. According to another embodiment, the electronic device 101 may further include at least one of the components illustrated in FIG. 1, and the second network 199 may further include at least one other network. According to an embodiment, the first communication processor 212, the second communication processor 214, the first RFIC 222, the second RFIC 224, the fourth RFIC 228, the first RFFE 232, and the second RFFE 234 may constitute at least a part of a wireless communication module 192. According to another embodiment, the fourth RFIC 228 may be omitted or may be included as a part of the third RFIC 226.

The first communication processor 212 may support the establishment of a communication channel of a band to be used for wireless communication with the first cellular network 292 and legacy network communication through the established communication channel. According to various embodiments, the first cellular network 292 may be a legacy network including a 2nd generation (2G), 3rd generation (3G), 4th generation (4G), and/or long-term evolution (LTE) network. The second communication processor 214 may support the establishment of a communication channel corresponding to a specified band (e.g., approximately 6 GHz to 60 GHz) among bands to be used for wireless communication with the second cellular network 294, and 5G network communication through the established communication channel. According to various embodiments, the second cellular network 294 may be a 5G network defined by 3GPP. Additionally, according to an embodiment, the first communication processor 212 or the second communication processor 214 may support the establishment of a communication channel corresponding to another specified band (e.g., approximately 6 GHz or less) among bands to be used for wireless communication with the second cellular network 294, and 5G network communication through the established communication channel. According to an embodiment, the first communication processor 212 and the second communication processor 214 may be implemented in a single chip or a single package. According to various embodiments, the first communication processor 212 or the second communication processor 214 may be formed with the processor 120, the coprocessor 123 of FIG. 1, or the communication module 190 in a single chip or a single package.

Upon transmission, the first RFIC 222 may convert a baseband signal generated by the first communication processor 212 into a radio frequency (RF) signal of approximately 700 MHz to approximately 3 GHz used in the first cellular network 292 (e.g., a legacy network). Upon reception, an RF signal may be obtained from the first cellular network 292 (e.g., a legacy network) through an antenna (e.g., the first antenna module 242), and may be preprocessed through an RFFE (e.g., the first RFFE 232). The first RFIC 222 may convert the preprocessed RF signal into a baseband signal so as to be processed by the first communication processor 212.

Upon transmission, the second RFIC 224 may convert a baseband signal generated by the first communication processor 212 or the second communication processor 214 into an RF signal (hereinafter, referred to as a 5G Sub6 RF signal) of the Sub6 band (e.g., approximately 6 GHz or less) used in the second cellular network 294 (e.g., the 5G network). Upon reception, a 5G Sub6 RF signal may be obtained from the second cellular network 294 (e.g., the 5G network) through an antenna (e.g., the second antenna module 244), and may be preprocessed through an RFFE (e.g., the second RFFE 234). The second RFIC 224 may convert the preprocessed 5G Sub6 RF signal into a baseband signal so as to be processed by a corresponding one of the first communication processor 212 or the second communication processor 214.

The third RFIC 226 may convert a baseband signal generated by the second communication processor 214 into an RF signal (hereinafter, referred to as a 5G Above6 RF signal) of the 5G Above6 band (e.g., approximately 6 GHz to approximately 60 GHz) to be used in the second cellular network 294 (e.g., the 5G network). Upon reception, a 5G Above6 RF signal may be obtained from the second cellular network 294 (e.g., the 5G network) through an antenna (e.g., the antenna 248), and may be preprocessed through the third RFFE 236. For example, the third RFFE 236 may perform preprocessing of the signal by using a phase shifter 238. The third RFIC 226 may convert the preprocessed 5G Above6 RF signal into a baseband signal so as to be processed by the second communication processor 214. According to an embodiment, the third RFFE 236 may be formed as a part of the third RFIC 226.

According to an embodiment, the electronic device 101 may include the fourth RFIC 228 separately from or at least as a part of the third RFIC 226. In this case, the fourth RFIC 228 may convert the baseband signal generated by the second communication processor 214 into an RF signal (hereinafter, referred to as an intermediate frequency (IF) signal) of an intermediate frequency band (e.g., approximately 9 GHz to approximately 11 GHz), and then transmit the IF signal to the third RFIC 226. The third RFIC 226 may convert the IF signal into a 5G Above6 RF signal. Upon reception, a 5G Above6 RF signal may be received from the second cellular network 294 (e.g., the 5G network) through an antenna (e.g., the antenna 248), and may be converted into an IF signal by the third RFIC 226. The fourth RFIC 228 may convert the IF signal into the baseband signal so as to be processed by the second communication processor 214.

According to an embodiment, the first RFIC 222 and the second RFIC 224 may be implemented as a single chip or at least a part of a single package. According to an embodiment, the first RFFE 232 and the second RFFE 234 may be implemented as a single chip or at least a part of a single package. According to an embodiment, at least one of the first antenna module 242 or the second antenna module 244 may be omitted or combined with another antenna module to process RF signals of a plurality of corresponding bands.

According to an embodiment, the third RFIC 226 and the antenna 248 may be disposed on the same substrate to form a third antenna module 246. For example, the wireless communication module 192 or the processor 120 may be disposed on a first substrate (e.g., a main PCB). In this case, the third RFIC 226 may be disposed in a partial region (e.g., the lower surface) of a second substrate (e.g., a sub PCB) separate from the first substrate, and the antenna 248 may be disposed in another partial region (e.g., the upper surface) to form the third antenna module 246. According to an embodiment, the antenna 248 may include, for example, an antenna array that may be used for beamforming. By disposing the third RFIC 226 and the antenna 248 on the same substrate, it is possible to reduce the length of the transmission line therebetween. This, for example, may reduce the loss (e.g., attenuation) of a signal in a high frequency band (e.g., approximately 6 GHz to approximately 60 GHz) used for 5G network communication by the transmission line. Accordingly, the electronic device 101 may improve the quality or speed of communication with the second cellular network 294 (e.g., the 5G network).

The second cellular network 294 (e.g., the 5G network) may be operated independently of (e.g., Stand-Alone (SA)) or operated to be connected to (e.g., Non-Stand Alone (NSA)) the first cellular network 292 (e.g., the legacy network). For example, in the 5G network, there may be only an access network (e.g., 5G radio access network (RAN) or next-generation RAN (NG RAN)) and no core network (e.g., next-generation core (NGC)). In this case, after accessing the access network of the 5G network, the electronic device 101 may access an external network (e.g., the Internet) under the control of a core network (e.g., evolved packed core (EPC)) of the legacy network. Protocol information for communication with the legacy network (e.g., LTE protocol information) or protocol information for communication with the 5G network (e.g., New Radio (NR) protocol information) may be stored in the memory 230 and may be accessed by other components (e.g., the processor 120, the first communication processor 212, or the second communication processor 214).

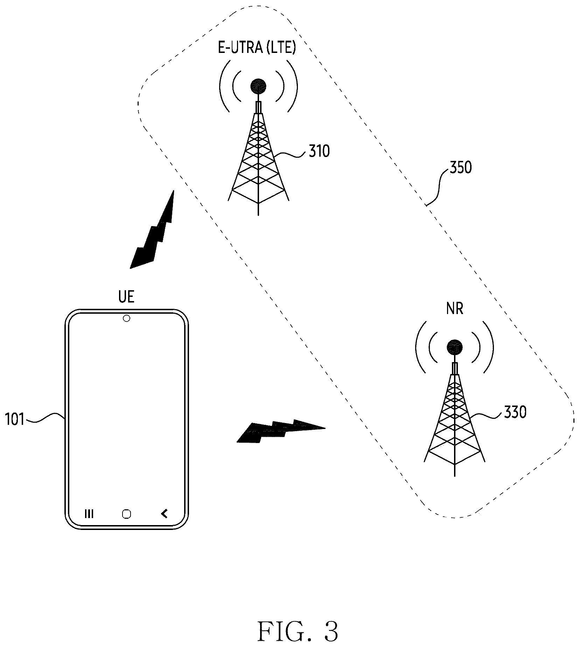

FIG. 3A is a diagram illustrating an example wireless communication system for providing a network of legacy communication and/or 5G communication according to embodiments. FIG. 3 illustrates a first base station 310, a second base station 330, and an electronic device 101, as some of nodes using a wireless channel in the wireless communication system.

Referring to FIG. 3, the first base station 310 and the second base station 330 may be network infrastructures adapted to provide wireless access to the electronic device 101. The first base station 310 and the second base station 330 may have a coverage defined as a certain geographical area determined based on a distance capable of transmitting wireless signals. Hereinafter, the term 'coverage' as used herein may refer to a service coverage area for a base station. Each base station may cover a single cell or multiple cells. Here, a plurality of cells may be distinguished by the frequencies they support and an area of a sector to be covered.

In addition to a base station, the first base station 310 may be referred to as `access point (AP)', `eNodeB (eNB)', `wireless point', 'transmission/reception point (TRP)', 'distributed unit (DU)', `radio unit (RU)', `remote radio head (RRH)', or other terms having an equivalent technical meaning. According to an embodiment, the first base station 310 may provide a first communication scheme (e.g., LTE) as a radio access technology (RAT). According to an embodiment, the first base station 310 may operate as an eNB for supporting an E-UTRA carrier in EN-DC. In an embodiment, the electronic device 101 may transmit and receive a wireless signal to and from the first base station 310 in a frequency band of about 800 MHz to about 2.6 GHz.

In addition to the base station, the second base station 330 may be referred to as `SG (5th generation) node', `SG nodeB (5G NB)', `next generation node B (gNB)', `wireless point', 'transmission/reception point (TRP)', `central unit (CU)', 'distributed unit (DU)', `radio unit (RU)', `remote radio head (RRH) or other terms having a technical meaning equivalent thereto. According to various embodiments, the second base station 330 may be connected to one or more 'transmission/reception points (TRPs)'. The second base station 330 may transmit a downlink signal or receive an uplink signal to/from the electronic device 101, via one or more TRPs. According to an embodiment, the second base station 330 may provide a second communication scheme (for example, NR) as a radio access technology (RAT). According to an embodiment, the second base station 330 may operate as a gNB for supporting an NR carrier in EN-DC. In an embodiment, the electronic device 101 may transmit and receive wireless signals in a frequency band of a first frequency range (e.g., NR FR1: 410 MHz (megahertz) to 7125 MHz) or a second frequency range (e.g., NR FR2: 24250 MHz to 52600 MHz, or 24250 MHz to 100000 MHz).

Although not shown in FIG. 3, in order to support network function virtualization, more efficient resource management, and scheduling in a 5G system, the base station may be implemented in a distributed deployment. For example, in the 5G system, a base station (e.g., gNB) may be further divided into a central unit (CU) and a distributed unit (DU). The CU may have at least radio resource control (RRC) and packet data convergence protocol (PDCP) protocol layers and may include a service data adaptation protocol (SDAP). The DU may have radio link control (RLC), a medium access control (MAC), and physical layers. A standardized common interface F1 may exist between the CU and the DU. The F1 interface may be divided into a control plane F1-C and a user plane F1-U. A transmission network layer of F1-C may be based on IP transmission. In order to more stably transmit signaling, a standard control transmission protocol (SCTP) may be added over an internet protocol (IP). An application layer protocol may be F1AP. The SCTP may provide stable application layer messaging. A transmission layer of F1-U may be a user datagram protocol (UDP)/IP. GTP (GPRS (General Packet Radio Service) Tunnelling Protocol, GTP)-U may be used on the UDP/IP to perform user plane protocol data units (PDUs).

The electronic device 101, which is a user equipment used by a user, may perform communication with the first base station 310 or the second base station 330 over a wireless channel. In some cases, the electronic device 101 may operate without a user intervention. That is to say, at least one of the electronic devices 101 is a device for performing machine type communication (MTC) and may not be carried by a user. In addition to the term 'terminal', the electronic device 101 may be referred to as `user equipment (UE)', `mobile station', `subscriber station', `customer premises equipment (CPE)', `remote terminal', `wireless terminal', `electronic device', `vehicle terminal', `user device' or any other terms having a technical meaning equivalent thereto.

According to an embodiment, the electronic device 101 may be connected to the first base station 310 and the second base station 330 through dual connectivity (DC) 350. One of the first base station 310 or the second base station 330 may operate as a master node (MN), and the other base station may operate as a secondary node (SN). The MN and the SN may be connected through a network interface (e.g., an X2 interface or an XN interface).

Although not illustrated in FIG. 3, the first base station 310 or the second base station 330 may be connected to an evolved packet core (EPC) network, which is a core of a 4G network. When the first base station 310 provides a primary cell group and the second base station 330 provides a secondary cell group, a connection between the two base stations may be referred to as Evolved universal terrestrial radio access-New radio dual-connectivity (EN-DC). With the EN-DC, a terminal may access an LTE cell using LTE technology and may access an NR cell using NR technology. Hereinafter, a cell using LTE technology may be referred to as an LTE cell, an E-UTRA cell, or a 4G cell, and a frequency of a cell using the LTE technology may be referred to as an E-UTRA carrier, an LTE carrier, or a 4G carrier. Hereinafter, a cell using the NR technology may be referred to as an NR cell or a 5G cell, and a frequency of a cell using the NR technology may be referred to as an NR carrier or a 5G carrier.

Hereinafter, in various embodiments of the disclosure, the EN-DC is described as an example as a technology for providing both an LTE carrier and an NR carrier, but embodiments of the disclosure are not limited thereto. The same principle of the embodiments described below may be also applied to other types of DCs (e.g., NE-DC (New radio-Evolved universal terrestrial radio access dual-connectivity), NGEN-DC (NG-RAN Evolved universal terrestrial radio access-New radio dual-connectivity)).

Embodiments of the disclosure propose a technology for securing better antenna performance as well as reducing degradation of camera performance and specific absorption rate (SAR) in an electronic device using a 5G technology. For EN-DC (Evolved universal terrestrial radio access-New radio Dual-Connectivity) in a 5G communication method, an electronic device may require antennas. An electronic device may include an NR transmission/reception antenna and an LTE transmission antenna used as an anchor. The antennas to be used may vary depending on a frequency band of an LTE carrier of EN-DC and a frequency band of an NR carrier of EN-DC. An antenna relatively adjacent to a camera may affect camera performance upon transmitting and receiving signals. Depending on which antennas are used, the camera performance or SAR may vary according to antenna location, and thus antenna selection according to frequency band may be required.

In the embodiments of the disclosure, a low-band, a mid-band, and a high-band may be defined to distinguish frequency bands. For example, the low-band may refer to a frequency band having a range of less than about 1 GHz. The mid-band may refer to a frequency band having a range of less than about 2.3 GHz. The high-band may refer to a frequency band having a range of about 2.3 GHz or more. Reference values of the frequency bands of 1 GHz and 2.3 GHz described above are only of examples, and it will be apparent to those skilled in the art that other values having the same technical meaning may be used.

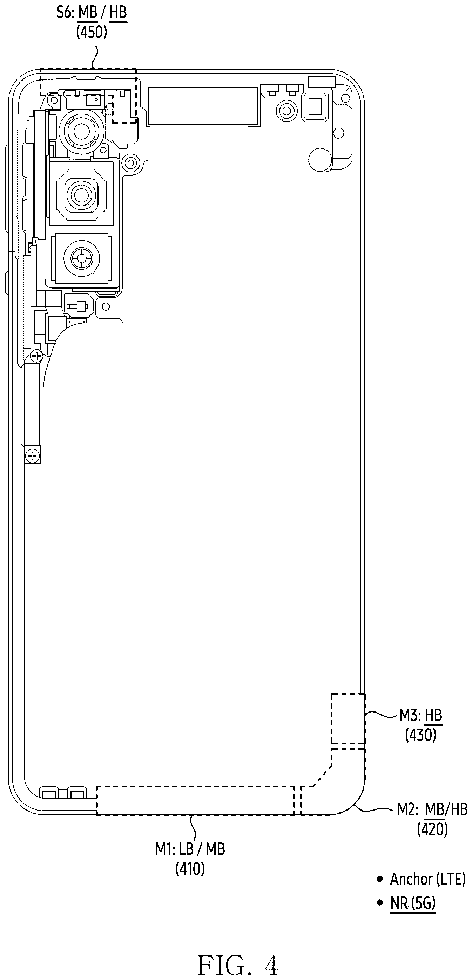

FIG. 4 illustrates an example of an antenna arrangement for EN-DC (Evolved universal terrestrial radio access-New radio Dual-Connectivity of an electronic device according to embodiments. According to an embodiment, an antenna may include a radiator for providing a signal to be fed to its outside. The antenna may be configured to radiate a signal through the radiator. For example, the radiator may include a conductive portion of a frame (e.g., a metal frame) of the electronic device 101. The conductive portion may be disposed between non-conductive portions of the frame. The non-conductive portion may include a segmented portion between two conductive portions. Further, for example, the radiator may include a patch disposed in an area of the electronic device 101. Further, for example, the radiator may be of a laser direct structuring (LDS) type, including a plating pattern. Furthermore, according to an embodiment, the antenna may be configured to radiate a signal through a slot or slit formed in an area of the electronic device 101.

Referring to FIG. 4, the electronic device 101 may include a first antenna 410, a second antenna 420, a third antenna 430, and an NR transmission/reception antenna 450. The first antenna 410 may support at least one first LTE frequency band. The first antenna 410 may be connected to a filter (not shown) for the at least one first LTE frequency band. The at least one first LTE frequency band may include a frequency band of an LTE carrier of EN-DC. The at least one first LTE frequency band may include a frequency band of a low-band LTE carrier. The at least one first LTE frequency band may include a frequency band (e.g., Band 1 (B 1) band, B2 band, B3 band, B4 band, B66 band) of a mid-band LTE carrier.

The second antenna 420 may support at least one second LTE frequency band. The at least one second LTE frequency band may be located in a frequency area higher than at least one first LTE frequency band of the first antenna 410. The second antenna 420 may be connected to a filter (not shown) for the at least one second LTE frequency band. The at least one second LTE frequency band may include a frequency band of an LTE carrier of EN-DC. The at least one second LTE frequency band may include a frequency band (e.g., a B7 band, a B38 band, a B41 band) of a high-band LTE carrier. The second antenna 420 may support at least one first NR frequency band. The second antenna 420 may be connected to a filter (not shown) for the at least one first NR frequency band. The at least one first NR frequency band may include a frequency band of an NR carrier of EN-DC. The at least one first NR frequency band may include a frequency band (e.g., NR Band 1 (N1), N2, N3, N66)) of a mid-band NR carrier. According to an embodiment, the second antenna 420 may operate as an additional transmission antenna for additional feeding of an NR carrier signal (hereinafter, referred to as an NR signal).

The third antenna 430 may support at least one second NR frequency band. The third antenna 430 may be connected to a filter (not shown) for the at least one second NR frequency band. The at least one second NR frequency band may include a frequency band of an NR carrier of EN-DC. The at least one second NR frequency band may include a frequency band (e.g., N77, N78, N79) for high-band NR. According to an embodiment, the third antenna 430 may operate as an additional transmission antenna for additional feeding of the NR signal.

The NR transmission/reception antenna 450 may support at least one first NR frequency band and at least one second NR frequency band. The at least one first NR frequency band may include a frequency band (e.g., NR Band 1 (N1), N2, N3, N66) for mid-band NR. At least one second frequency band may include a frequency band (e.g., N77, N78, N79) for high-band NR.

The electronic device 101 according to embodiments may determine a frequency band of an anchor carrier, that is, an LTE frequency band, and may determine an LTE transmission antenna supporting the LTE frequency band. The electronic device may determine a frequency band of an NR carrier, that is, an NR frequency band, and may determine an antenna for NR transmission/reception supporting the NR frequency band.

When the second antenna 420 is used for transmitting an NR signal, an LTE carrier signal (hereinafter, an LTE signal) may be transmitted through the first antenna 410. In the case of MB-MB EN-DC using an LTE carrier of a mid-band and an NR carrier of a mid-band, the LTE carrier and the NR carrier, which are anchor carriers, may correspond to the same frequency band. Since it is difficult to secure isolation between the first antenna 410 and the second antenna 420 in the same frequency band, interference may occur between two antennas located relatively adjacent. Such interference may cause degradation of antenna performance. When the second antenna 420 is used to transmit the NR signal, the LTE signal may be transmitted via the first antenna 410. In the case of HB-HB EN-DC using a high-band of LTE carrier and a high-band of NR carrier, the LTE carrier and the NR carrier, which are anchor carriers, may correspond to the same frequency band. As in the case of MB-MB EN-DC, interference may occur between the second antenna 420 and the third antenna 430.

In order to secure isolation between antennas in EN-DC and reduce loss from a power amplifier (PA) corresponding to each antenna, an NR transmission/reception antenna 450 may be used. The NR signal of the EN-DC may be fed to the NR transmission/reception antenna 450. The NR transmission/reception antenna 450 may be positioned at an upper end of the electronic device 101 compared to the first antenna 410, the second antenna 420, and the third antenna 430, so as to reduce an influence due to radiation of the LTE signal. Meanwhile, the position of the NR transmission/reception antenna 450 may affect other functions other than the radiation performance of the electronic device 101. For example, the NR transmission/reception antenna 450 may be positioned closer to the camera than the first antenna 410, the second antenna 420, and the third antenna 430. Noise may be generated in the camera due to the NR signal radiated through the NR transmission/reception antenna 450. In addition, a metal bridge of the electronic device 101 for providing isolation between the antennas (e.g., the NR transmission/reception antenna 450 or reception antennas (not shown)) located at the upper part may make impossible a power-back off according to a grip sensor. As the power-back off is not applied to the NR transmission/reception antenna 450, the SAR (specific absorption rate) may increase.

In order to maintain or increase the radiation performance and simultaneously to reduce the camera noise and SAR caused by the NR transmission/reception antenna 450, the electronic device 101 may additionally use another antenna for transmitting an NR signal. According to an embodiment, the second antenna 420 and the third antenna 430 of the electronic device 101 support an NR frequency band, so the second antenna 420 and the third antenna 430 may be used as additional antennas for transmitting the NR signal. In FIG. 4, the second antenna 420 and the third antenna 430 are illustrated as being located at the lower end of the electronic device 101, but embodiments are not limited thereto. An antenna located relatively farther than the NR transmission/reception antenna 450 from the camera or the grip sensor may be used as an additional antenna for transmitting the NR signal according to embodiments.

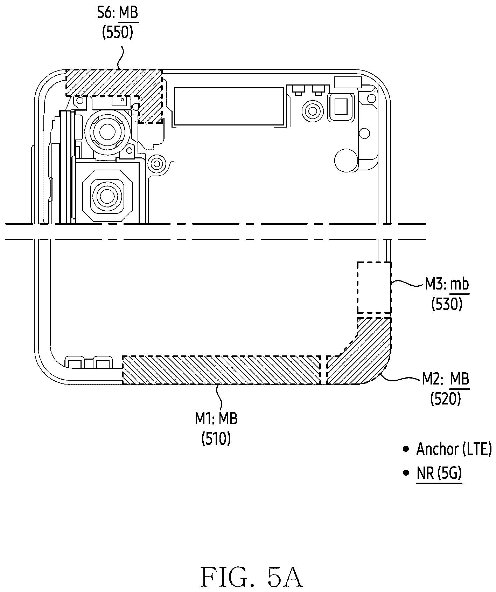

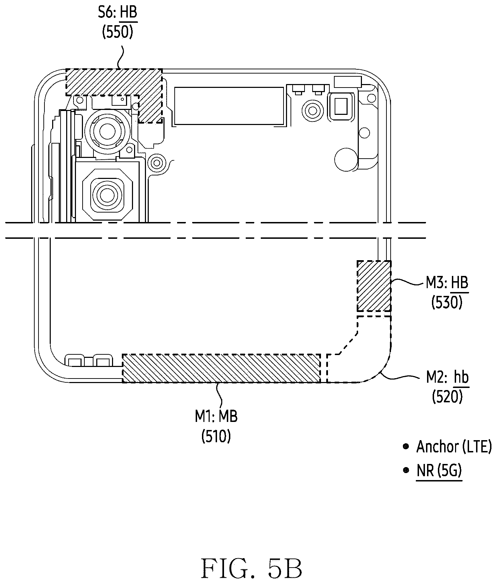

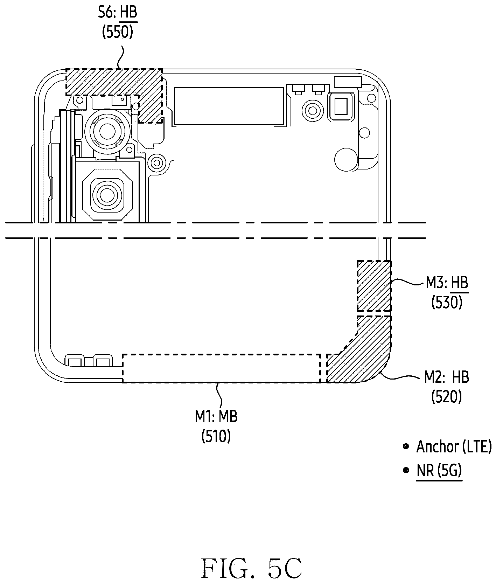

FIGS. 5A, 5B, and 5C illustrate examples of antennas according to a frequency band of an LTE (long term evolution) carrier and a frequency band of an NR carrier according to embodiments. Transmission antennas for EN-DC may be determined according to the frequency band of the LTE carrier and the frequency band of the NR carrier.

Referring to FIG. 5A, the electronic device 101 may include a first antenna 510, a second antenna 520, and a third antenna 530, being positioned at a lower end of the electronic device 101, and an NR transmission/reception antenna 550 positioned at an upper end of the electronic device 101. The electronic device 101 may transmit an NR signal through the NR transmission/reception antenna 550 positioned the an upper end of the electronic device 101 and an antenna (e.g., the second antenna 520 and/or the third antenna 530) positioned at the lower end of the electronic device 101. According to an embodiment, when the frequency band of the LTE carrier is a mid-band (MB) and the frequency band of the NR carrier is a mid-band, the electronic device 101 may access the network through the MB-MB EN-DC. The first antenna 510 may be used to transmit an LTE signal of a mid-band. The second antenna 520 may be used to transmit an NR signal of a mid-band. That is, the second antenna 520 may be determined as an additional antenna for transmitting the NR signal. According to an embodiment, the electronic device 101 may feed an NR signal to both the NR transmission/reception antenna 550 and the second antenna 520. According to an embodiment, the third antenna 530 that is not used for transmitting the NR signal of EN-DC may be used for receiving another NR signal.

Referring to FIG. 5B, the electronic device 101 may transmit an NR signal through the NR transmission/reception antenna 550 positioned at the upper end of the electronic device 101 and the antenna (e.g., the second antenna 520 and/or the third antenna 530) positioned at the lower end of the electronic device 101. According to an embodiment, when the frequency band of the LTE carrier is a mid-band (MB) and the frequency band of the NR carrier is a high-band (HB), the electronic device 101 may access the network through the HB-MB EN-DC. The first antenna 510 may be used to transmit a mid-band LTE signal. The third antenna 530 may be used to transmit a high-band NR signal. That is, the third antenna 530 may be determined as an additional antenna for transmitting the NR signal. According to an embodiment, the electronic device 101 may feed the NR signal to both the NR transmission/reception antenna 550 and the third antenna 530. According to an embodiment, the second antenna 520 that is not used for transmitting the NR signal of EN-DC may be used for receiving another NR signal.

Referring to FIG. 5C, the electronic device 101 may transmit the NR signal through the NR transmission/reception antenna 550 positioned at the upper end of the electronic device 101 and the antenna (e.g., the second antenna 520 and/or the third antenna 530) positioned at the lower end of the electronic device 101. According to an embodiment, when the frequency band of the LTE carrier is a high-band (HB) and the frequency band of the NR carrier is a high-band (HB), the electronic device 101 may access the network through the HB-HB EN-DC. The second antenna 520 may be used to transmit a high-band of LTE signal. The third antenna 530 may be used to transmit a high-band of NR signal. That is, the third antenna 530 may be determined as an additional antenna for transmitting the NR signal. According to an embodiment, the electronic device 101 may feed the NR signal to both the NR transmission/reception antenna 550 and the third antenna 530.

The electronic device 101 according to embodiments may select an additional antenna for transmitting the NR signal in addition to the NR transmission antenna (e.g., the NR transmission/reception antenna 550 of FIG. 5), in order to secure excellent radiation performance upon transmitting the NR signal. As described with reference to FIGS. 5A, 5B, and 5C, the electronic device 101 may select an additional antenna positioned at the lower end of the electronic device 101 in addition to the NR transmission/reception antenna 550 positioned at the upper end of the electronic device 101. According to an embodiment, in EN-DC using both the LTE carrier and the NR carrier, a transmission antenna for the NR carrier may vary according to a transmission antenna (hereinafter, an anchor antenna) for the LTE carrier. The electronic device 101 may select an additional antenna based on the anchor antenna. According to an embodiment, in the EN-DC, a transmission antenna for an NR carrier may vary depending on the frequency band of the NR carrier. The electronic device 101 may select an additional antenna based on the frequency band of the NR carrier. Transmission power may be divided by transmitting the NR signal through another additional transmission antenna in addition to the NR transmission/reception antenna 550 positioned relatively adjacent to a camera or a grip sensor of the electronic device 101. Due to the reduced transmission power of the NR transmission/reception antenna 550, the camera noise may be reduced and the SAR may be then reduced.

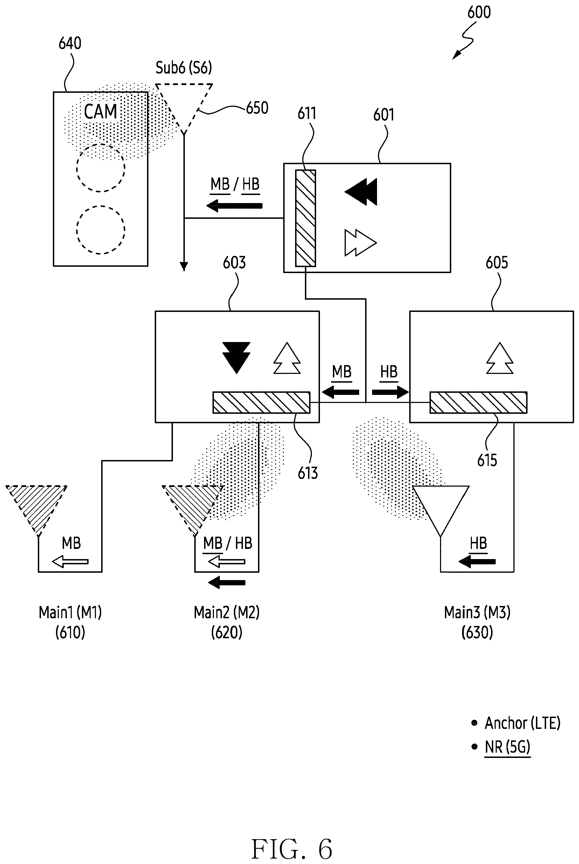

FIG. 6 illustrates an example 600 of communication modules and antennas for EN-DC according to embodiments. The communication module may include a wireless communication circuitry for processing wireless signals. For example, the communication module may include a radio frequency front end (RFFE). The communication module may include a wireless communication circuitry configured of at least some components for signal processing of an RFFE.

Referring to FIG. 6, the electronic device 101 may include a first antenna 610, a second antenna 620, a third antenna 630, and an NR transmission/reception antenna 650.

The NR transmission/reception antenna 650 may be used for transmitting an NR signal. The NR transmission/reception antenna 650 may be connected to a first communication module 601. According to an embodiment, the first communication module 601 may be an EN-DC transmission module. The first communication module 601 may include filters for NR frequency bands for EN-DC. The first communication module 601 may support at least one first NR frequency band and at least one second NR frequency band. The at least one first NR frequency band may include a frequency band (e.g., NR Band 3 (N3)) for mid-band NR. The at least one second frequency band may include a frequency band (e.g., N77, N78, N79) for high-band NR.

The first antenna 610 may be used to transmit an LTE signal. The first antenna 610 may be connected to a second communication module 603. According to an embodiment, the second communication module 603 may be a front end module (FEM) for LTE. The second communication module 603 may support at least one first LTE frequency band. The at least one first LTE frequency band may include a frequency band (e.g., Band 1 (B1) band, B2 band, B3 band, B4 band, B66 band) of an LTE carrier of a mid-band.

The second antenna 620 may be used for transmitting and receiving the LTE signal. The second antenna 620 may be connected to the second communication module 603. According to an embodiment, the second communication module 603 may be a front end module for LTE. The front end module may support at least one second LTE frequency band. The at least one second LTE frequency band may include a frequency band (e.g., B7 band, B38 band, B41 band) of a high-band LTE carrier. According to an embodiment, the second antenna 620 may be used to transmit an NR signal. The second communication module 603 may support at least one first NR frequency band. The at least one first NR frequency band may include a frequency band (e.g., N1 band, N2 band, N3 band, N66 band) of a mid-band NR carrier. The electronic device 101 may transmit a signal of the mid-band NR carrier (e.g., NR Band 3 (N3)) via the second communication module 603 and the second antenna 620.

The third antenna 630 may be used for transmitting and receiving the NR signal. The third antenna 630 may be connected to the third communication module 605. According to an embodiment, the third communication module 605 may be a communication module for receiving the NR signal. The third communication module 605 may support at least one second NR frequency band. The at least one second NR frequency band may include a frequency band (e.g., N77, N78, N79) for a high-band NR. According to an embodiment, the third antenna 630 may be used to transmit the NR signal. The electronic device 101 may transmit a signal of a high-band NR carrier (e.g., NR Band 77, 78, 79) via the third communication module 605 and the third antenna 630.

According to an embodiment, the first communication module 601 may include a first switch 611 inside the first communication module 601. The electronic device 101 may feed an NR carrier signal to both the NR transmission/reception antenna 650 and an additional antenna (e.g., the second antenna 620 and/or the third antenna 630) through the first switch 611. According to an embodiment, a distance between the additional antenna and a camera 640 may be greater than a distance between the NR transmission/reception antenna 650 and the camera 640. Electrical paths may be branched off through the first switch 611 in order to feed signals to both the NR transmission/reception antenna 650 and the additional antenna. Power output from a power amplifier (PA) of the first communication module 601 may be distributed to the NR transmission/reception antenna 650 and an additional antenna by means of the first switch 611. The first switch 611 may function as a power divider. For example, assuming that the power amplifier of the first communication module 601 outputs 24 dBm of power, the power distributed through the first switch 611 may be reduced by 3 dBm respectively, so that 21 dBm of power may be transmitted to each of the NR transmission/reception antenna 650 and the additional antenna. That is, the PA of the first communication module 601 outputs 24 dBm of power, but the power transferred to each of the NR transmission/reception antenna 650 and the additional antenna may be 21 dBm. Due to such a power distribution, the influence of the NR transmission/reception antenna 650 relatively adjacent to the camera 640 may be reduced. As the power allocated to the NR transmission/reception antenna 650 is lowered, noise in the camera 640 may be reduced, and the SAR may be also reduced. Performance degradation due to such a reduced power of the NR transmission/reception antenna 650 may be then compensated for by radiation of an additional antenna.

According to an embodiment, the additional antenna may not be an anchor antenna, but may be required to be an antenna not used for NR reception. The electronic device 101 may identify an additional antenna based on the frequency band of the LTE carrier of EN-DC and the frequency band of the NR carrier of EN-DC. The electronic device 101 may control the first communication module 601 such that the first switch 611 is connected to the path of the additional antenna.

According to an embodiment, in EN-DC where the frequency band of the LTE carrier is a mid-band and the frequency band of the NR carrier is a mid-band, the electronic device 101 may identify the first antenna 610 as an anchor antenna, and the electronic device 101 may identify the second antenna 620 as an additional antenna for transmitting a signal of the NR carrier. The third antenna 630 may be used for receiving the NR signal (i.e., used as an NR 4 Rx antenna), and therefore the third antenna 630 may not be selected as an additional antenna for transmitting the NR carrier signal.

According to an embodiment, in EN-DC where the frequency band of the LTE carrier is a mid-band and the frequency band of the NR carrier is a high-band, the electronic device 101 may identify the first antenna 610 as an anchor antenna, and the electronic device 101 may identify the third antenna 630 as an additional antenna for transmitting a signal of the NR carrier. The second antenna 620 may be used for receiving the NR signal (i.e., used as an NR 4 Rx antenna), and thus the second antenna 620 may not be selected as an additional antenna for transmitting the NR carrier signal.

According to an embodiment, in EN-DC where the frequency band of the LTE carrier is a high-band and the frequency band of the NR carrier is a high-band, the electronic device 101 may identify the second antenna 620 as an anchor antenna, and the electronic device 101 may identify the third antenna 630 as an additional antenna for transmitting the signal of the NR carrier.

According to an embodiment, the second communication module 603 may include a second switch 613 inside the second communication module 603. When transmitting the NR carrier signal, the electronic device 101 may control the second communication module 603 to connect the second antenna 620 and the second switch 613.

According to an embodiment, the third communication module 605 may include a third switch 615 inside the third communication module 605. When transmitting the NR carrier signal, the electronic device 101 may control the third communication module 605 to connect the third antenna 630 and the third switch 615.

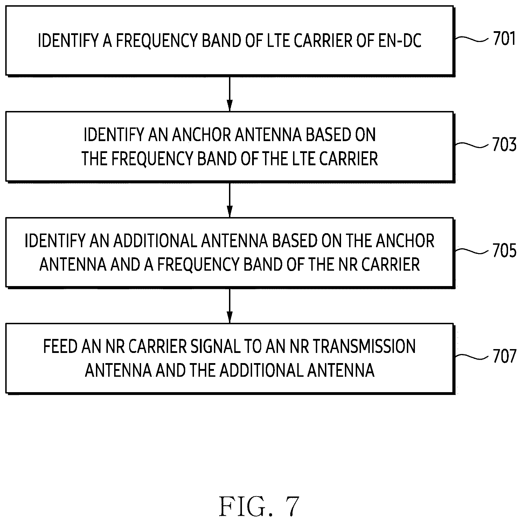

FIG. 7 illustrates an example operation flow of an electronic device for selecting an NR antenna of EN-DC according to embodiments. The electronic device of FIG. 7 may be an example of the electronic device 101 of FIG. 1. The operation of FIG. 7 may be performed by the processor 120 of FIG. 1 or the second communication processor 214 of FIG. 2.

Referring to FIG. 7, in operation 701, the electronic device 101 according to an embodiment may identify a frequency band of an LTE carrier of EN-DC. The electronic device 101 using EN-DC may be connected to an LTE base station (e.g., eNB) (e.g., the first base station 310) via a master cell group (MCG) bearer and may be connected to an NR base station (e.g., gNB) (e.g., the second base station 330) via a secondary cell group (SCG) bearer. In order to use EN-DC, the electronic device 101 may be required to connect to the LTE base station before connecting to the NR base station. The electronic device 101 may access the LTE base station to establish the MCG bearer. The electronic device 101 may identify the frequency band of the LTE carrier to access the LTE base station.

In operation 703, the electronic device 101 according to an embodiment may identify an anchor antenna based on the frequency band of the LTE carrier. The electronic device 101 may identify a transmission antenna supporting the frequency band of the LTE carrier, as the anchor antenna. The anchor antenna may refer to an antenna for the frequency band of the LTE carrier that functions as an anchor in EN-DC.

According to an embodiment, the electronic device 101 may include a first antenna supporting at least one first LTE frequency band and a second antenna supporting at least one second LTE frequency band. A range of the at least one first LTE frequency band may be lower on the frequency domain than a range of the at least one second LTE frequency band. For example, the at least one first LTE frequency band may be a mid-band (e.g., in a range of 1 GHz to 2.3 GHz) and the at least one second LTE frequency band may be a high-band (e.g., 2.3 GHz or more). According to an embodiment, when the frequency band of the LTE carrier identified in operation 701 is included in the at least one first LTE frequency band, the electronic device 101 may identify a first antenna (e.g., the first antenna 610 of FIG. 6) as an anchor antenna. According to an embodiment, when the frequency band of the LTE carrier identified in operation 701 is included in the at least one second LTE frequency band, the electronic device 101 may identify a second antenna (e.g., the second antenna 620 of FIG. 6) as an anchor antenna.

In operation 705, the electronic device 101 according to an embodiment may identify an additional antenna based on the anchor antenna and the frequency band of the NR carrier. The electronic device 101 may access the NR base station to establish the SCG bearer. The electronic device 101 may identify the frequency band of the NR carrier to access an NR base station. According to an embodiment, the electronic device 101 may receive an SCG configuration (e.g., gNB (a secondary gNB) configuration) from a serving base station (e.g., an LTE base station). The electronic device 101 may identify the frequency band of the NR carrier of EN-DC based on the SCG configuration.

The electronic device 101 may include an antenna (hereinafter, referred to as an "NR transmission antenna") for transmitting an NR carrier signal. The electronic device 101 according to an embodiment may identify an additional antenna distinct from the NR transmission antenna in order to transmit the NR carrier signal via a plurality of antennas. That is, the additional antenna may refer to an antenna that is used for transmitting the NR carrier signal. According to an embodiment, the electronic device 101 may identify an antenna for transmitting the LTE signal under other communication condition (e.g., HB LTE transmission, HB-HB EN-DC), as an additional antenna in EN-DC (e.g., MB-MB EN-DC) under a specific condition. According to an embodiment, the electronic device 101 may identify an antenna for receiving the NR carrier signal under other communication condition (e.g., MB-MB EN-DC), as an additional antenna under EN-DC (e.g., HB-MB EN-DC or HB-HB EN-DC) under a specific condition.

According to an embodiment, the electronic device 101 may include an NR transmission antenna supporting at least one first NR frequency band and at least one second NR frequency band. According to an embodiment, the electronic device 101 may include a second antenna supporting at least one first NR frequency band and a third antenna supporting at least one second NR frequency band. The second antenna may be the same as an antenna supporting the at least one second LTE frequency band in operation 701. The at least one first NR frequency band may have a lower frequency range on the frequency domain than that of the at least one second NR frequency band. For example, the at least one first NR frequency band may be a mid-band (e.g., in a range of 1 GHz to 2.3 GHz) and the at least one second NR frequency band may be a high-band (e.g., 2.3 GHz or more).

According to an embodiment, the electronic device 101 may identify one of the second antenna and the third antenna as an additional antenna. The electronic device 101 may identify an antenna other than the NR transmission antenna as an additional antenna in order to transmit the signal of the NR carrier through a plurality of antennas. When the frequency band of the NR carrier is included in the at least one first NR frequency band, the electronic device 101 may identify the second antenna (e.g., the second antenna 620 of FIG. 6) as an additional antenna. According to an embodiment, when the frequency band of the NR carrier is included in the at least one second NR frequency band, the electronic device 101 may identify the third antenna (e.g., the third antenna 630 of FIG. 6) as an additional antenna.

In operation 707, the electronic device 101 according to an embodiment may feed the NR carrier signal to the NR transmission antenna and the additional antenna. The electronic device 101 may transmit the NR carrier signal to a path of the NR transmission antenna and a path of the additional antenna via a switch. According to an embodiment, the switch (e.g., the first switch 611) may be located inside a communication module (e.g., the EN-DC transmission module) (e.g., the first communication module 601). The NR carrier signal may be branched off to the path of the NR transmission antenna and the path of the additional antenna via the switch inside the communication module. The output of the power amplifier (PA) for the NR carrier signal of the communication module may be branched into the path of the NR transmission antenna and the path of the additional antenna. The switch may function as a power divider. According to another embodiment, the switch may be located out of the communication module (e.g., the EN-DC transmission module). The electronic device 101 may radiate the NR carrier signal through the NR transmission antenna and the additional antenna.

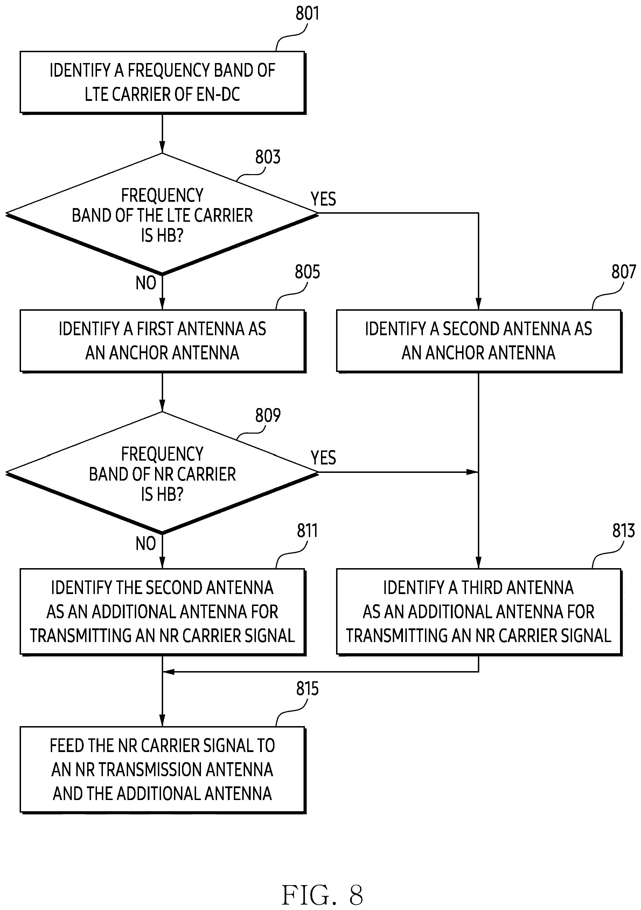

FIG. 8 illustrates an example operation flow of an electronic device for selecting an NR antenna of EN-DC, based on a frequency band of an LTE carrier and a frequency band of an NR carrier according to embodiments. The electronic device of FIG. 8 may be an example of the electronic device 101 of FIG. 1. The operation of FIG. 8 may be performed by the processor 120 of FIG. 1 or the second communication processor 214 of FIG. 2.

Referring to FIG. 8, in operation 801, the electronic device 101 according to an embodiment may identify the frequency band of the LTE carrier of EN-DC. The electronic device 101 may access an LTE base station to establish an MCG bearer. The electronic device 101 may identify the frequency band of the LTE carrier to access the LTE base station.

In operation 803, the electronic device 101 according to an embodiment may determine whether the frequency band of the LTE carrier is a high-band. According to an embodiment, the electronic device 101 may include a first antenna supporting an LTE frequency band of a mid-band and a second antenna supporting an LTE frequency band of a high-band. For example, the mid-band may refer to a frequency band in a range of 1 GHz to 2.3 GHz, and the high-band may refer to a frequency band of 2.3 GHz or more. When the frequency band of the LTE carrier is not the high-band, the electronic device 101 may perform operation 805. When the frequency band of the LTE carrier is the high-band, the electronic device 101 may perform operation 807.

In operation 805, the electronic device 101 according to an embodiment may identify the first antenna as an anchor antenna. The anchor antenna may refer to an antenna for a frequency band of an LTE carrier that functions as an anchor in EN-DC. Since a cell of an LTE base station connected to the electronic device 101 supports the LTE frequency band of a mid-band, the electronic device 101 may identify the first antenna as the anchor antenna.

In operation 807, the electronic device 101 according to an embodiment may identify the second antenna as an anchor antenna. Since the cell of the LTE base station connected to the electronic device 101 supports a high-band of LTE frequency band, the electronic device 101 may identify the second antenna as the anchor antenna. Since the second antenna operates as the anchor antenna, the electronic device 101 may not select the second antenna as an additional antenna for transmitting the NR carrier signal to be described later. The electronic device 101 may perform operation 813 after performing the operation 807.

In operation 809, the electronic device 101 according to an embodiment may determine whether the frequency band of the NR carrier is a high-band. The electronic device 101 may include an NR transmission antenna that supports both a mid-band of NR frequency band and a high-band of NR frequency band. According to an embodiment, the electronic device 101 may include the second antenna supporting the mid-band of NR frequency band and the third antenna supporting the high-band of NR frequency band, in addition to the NR transmission antenna. The electronic device 101 may identify one of the second antenna and the third antenna as an antenna for feeding (providing) the NR carrier signal in the same manner as the NR transmission antenna. For example, the mid-band may refer to the frequency band of 1 GHz or more and less than 2.3 GHz, and the high-band may refer to the frequency band of 2.3 GHz or more. When the frequency band of the NR carrier is not the high-band, the electronic device 101 may perform operation 811. When the frequency band of the NR carrier is the high-band, the electronic device 101 may perform operation 813.

In operation 811, the electronic device 101 according to an embodiment may identify the second antenna as an additional antenna for transmitting the NR carrier signal. Since the cell of the NR base station connected to the electronic device 101 supports the mid-band of NR frequency band, the electronic device 101 may identify the second antenna as the additional antenna for transmitting the NR carrier signal.

In operation 813, the electronic device 101 according to an embodiment may identify the third antenna as an additional antenna for transmitting the NR carrier signal. Since the cell of the NR base station connected to the electronic device 101 supports the high-band of NR frequency band, the electronic device 101 may identify the third antenna as the additional antenna for transmitting the NR carrier signal.

In operation 815, the electronic device according to an embodiment may feed the NR carrier signal to the NR transmission antenna and the additional antenna. The electronic device 101 may transmit the NR carrier signal to the path of the NR transmission antenna and the path of the additional antenna. The electronic device 101 may feed the NR carrier signal to the NR transmission antenna through a communication module (e.g., the first communication module 601 of FIG. 6) connected to the NR transmission antenna. According to an embodiment, the path of the additional antenna may vary depending on whether the additional antenna is the second antenna or the third antenna. When the second antenna is identified, the electronic device 101 may transmit the NR carrier signal to the communication module (e.g., the second communication module 603 of FIG. 6) where which the second antenna is located. When the third antenna is identified, the electronic device 101 may transmit the NR carrier signal to the communication module (e.g., the third communication module 605 of FIG. 6) where the third antenna is located.

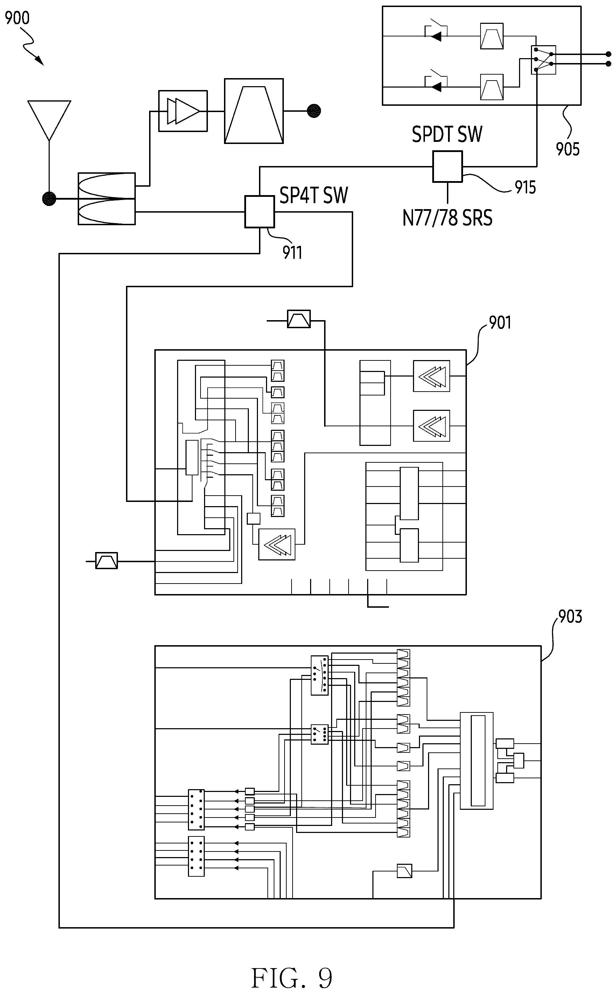

FIG. 9 illustrates an example of an external switch for transmitting an NR carrier signal of EN-DC according to embodiments.

Referring to FIG. 9, the electronic device 101 may include a first communication module 901, a second communication module 903, and a third communication module 905. The first communication module 901 may support at least one first NR frequency band and at least one second NR frequency band. For example, the first communication module 901 may include a first communication module 601. The at least one first NR frequency band may include a frequency band (e.g., NR Band 3 (N3)) for mid-band NR. The at least one second frequency band may include a frequency band (e.g., N77, N78, N79) for high-band NR. The first communication module 901 may be connected to a first external switch 911 which is a single-pole four-through (SP4T) switch for SRS transmission.

The second communication module 903 may support at least one first LTE frequency band. The at least one first LTE frequency band may include a frequency band (e.g., Band 1 (B1) band, B2 band, B3 band, B4 band, B66 band) of a mid-band of LTE carrier. The second communication module 903 may support at least one first NR frequency band. The at least one first NR frequency band may include a frequency band (e.g., an N1 band, an N2 band, an N3 band, an N66 band) of a mid-band of NR carrier. For example, the second communication module 903 may include a second communication module 603.

The third communication module 905 may support at least one second NR frequency band. The at least one second NR frequency band may include a frequency band (e.g., N77, N78, N79) for high-band NR. The third communication module 905 may be connected to a second external switch 915 which is a single-pole dual-through (SPDT) switch for SRS transmission. For example, the third communication module 905 may include a third communication module 605.

According to an embodiment, the NR transmission antenna and the additional antenna may be branched off through an external switch rather than an internal switch of the first communication module 901. The electronic device 101 may provide the NR carrier signal to both the NR transmission antenna and the additional antenna through the first external switch 911. The electronic device 101 may transmit a signal to one of the second communication module 903 and the third communication module 905, and the NR transmission antenna, through the first external switch 911. One of the second communication module 903 and the third communication module 905 may be determined according to the anchor antenna and the frequency band of the NR carrier.

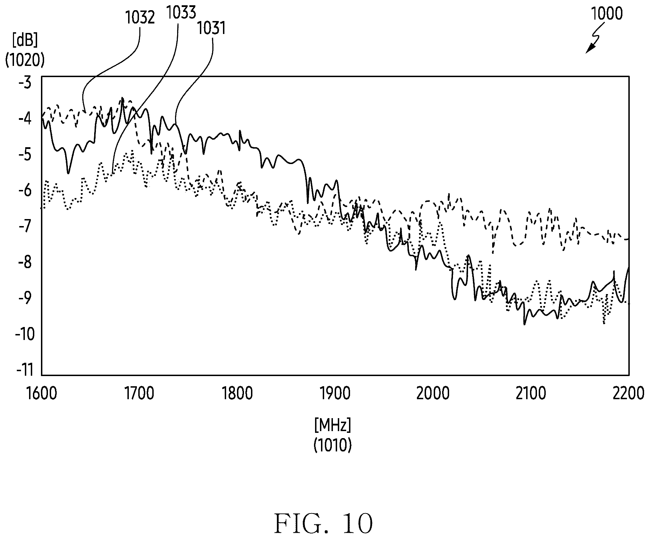

FIG. 10 illustrates a performance graph 1000 when using an additional antenna for an NR carrier of EN-DC according to embodiments. FIG. 10 indicates an NR carrier of an N3 frequency band. The frequency band of N3 indicates a carrier frequency of 1710 MHz to 1785 MHz in the uplink.

Referring to FIG. 10, the performance graph 1000 shows the total radiation efficiency for each frequency. A horizontal axis 1010 of the performance graph 1000 represents the frequency (in unit of megahertz (MHZ)), and a vertical axis 1020 represents the total radiation efficiency (in unit of decibel (dB)). In the performance graph 1000, a solid line 1031 represents the total radiation efficiency in case where an NR carrier signal of EN-DC is fed to the NR transmission/reception antenna 550 at the upper end and the second transmission antenna 520 at the lower end of the electronic device 101 of FIG. 5. In the performance graph 1000, a broken line 1032 represents the total radiation efficiency in case where an NR carrier signal is fed to the second transmission antenna 520 at the upper end of the electronic device 101 of FIG. 5. In the performance graph 1000, a dotted line 1033 represents the total radiation efficiency in case where an NR carrier signal is fed to the NR transmission/reception antenna 550 at a lower end of the electronic device 101 of FIG. 5.

As shown in the performance graph 1000, the electronic device according to embodiments of the disclosure may increase the radiation efficiency by transmitting the NR carrier signal of EN-DC through both the NR transmission/reception antenna and other additional antenna. The radiation efficiency indicated by the solid line 1031 in the frequency domain of the N3 band is greater than the radiation efficiency of each of the broken line 1032 and the dotted line 1033. Therefore, even if the power transferred to the transmission antenna is lowered, feeding power to both the NR transmission/reception antenna and the other additional antenna makes it possible to maintain or further improve the overall antenna performance, due to its high radiation efficiency.

As the power allocated to the NR transmission/reception antenna (e.g., the NR transmission/reception antenna 550 of FIG. 5) positioned relatively adjacent to the camera decreases, the camera noise may decrease. Further, as the power allocated to the NR transmission/reception antenna (e.g., the NR transmission/reception antenna 550 of FIG. 5) positioned relatively adjacent to a proximity sensor decreases, the SAR may decrease. In addition, a higher radiation gain may be achieved by transmitting the NR carrier signal of EN-DC through both the NR transmission/reception antenna (e.g., the NR transmission/reception antenna 550 of FIG. 5) and the additional antenna (e.g., the second antenna 520 of FIG. 5).

As described above, an electronic device (e.g., the electronic device 101) according to an embodiment may include a wireless communication circuitry for supporting EN (Evolved-Universal Terrestrial Radio Access (E-UTRA)-New Radio (NR))-DC (dual connectivity); a first antenna (e.g., the first antenna 610) for at least one first Long-term evolution (LTE) frequency band; a second antenna (e.g., the second antenna 620) for at least one second LTE frequency band and at least one first New radio (NR) frequency band; a third antenna (e.g., the third antenna 630) for at least one second NR frequency band; an NR transmission/reception antenna (e.g., the NR transmission/reception antenna 650) for the at least one first NR frequency band and the at least one second NR frequency band; and a processor. The processor may control the wireless communication circuitry to identify an anchor antenna of the first antenna and the second antenna, based on a frequency band of an LTE carrier of the EN-DC, identify a frequency band of an NR carrier of the EN-DC, identify an additional antenna for transmitting an NR carrier signal of the EN-DC of the second antenna and the third antenna, based on the anchor antenna and the frequency band of the NR carrier of the EN-DC, and feed the NR carrier signal of the EN-DC to the NR transmission/reception antenna and the additional antenna.

In an embodiment, when the anchor antenna is the first antenna and the frequency band of the NR carrier of the EN-DC is included in the at least one first NR frequency band, the additional antenna may be the second antenna, when the anchor antenna is the first antenna and the frequency band of the NR carrier of the EN-DC is included in the at least one second NR frequency band, the additional antenna may be the third antenna, and when the anchor antenna is the second antenna, the additional antenna for the NR carrier of the EN-DC may be the third antenna.

In an embodiment, when the frequency band of the LTE carrier of the EN-DC is included in the at least one first LTE frequency band, the anchor antenna may be the first antenna, and when the frequency band of the LTE carrier of the EN-DC is included in the at least one second LTE frequency band, the anchor antenna may be the second antenna.

In an embodiment, the electronic device may further include a switching circuitry for power distribution to the NR transmission/reception antenna and the additional antenna, and when the frequency band of the NR carrier is included in the at least one first NR frequency band, the switching circuitry may be connected to the second antenna and when the frequency band of the NR carrier is included in the at least one second NR frequency band, the switching circuitry may be connected to the third antenna.

In an embodiment, the electronic device may further include a camera, and a distance between the additional antenna and the camera may be greater than a distance between the NR transmission/reception antenna and the camera.

In an embodiment, the electronic device may further include a grip sensor, and a distance between the additional antenna and the grip sensor may be greater than a distance between the NR transmission/reception antenna and the grip sensor.

In an embodiment, when the anchor antenna is the first antenna and the frequency band of the NR carrier is included in the at least one first NR frequency band, the third antenna may be used to receive an NR signal.

In an embodiment, when the anchor antenna is the first antenna and the frequency band of the NR carrier is included in the at least one second NR frequency band, the second antenna may be used to receive an NR signal.

In an embodiment, the at least one first NR frequency band may include a 5G NR Band 3 corresponding to an uplink frequency range of 1710 MHz (megahertz) to 1785 MHz.

In an embodiment, the at least one first LTE frequency band may include a frequency band for a mid-band of LTE, the at least one second LTE frequency band may include a frequency band for a high-band of NR, the at least one first NR frequency band may include a frequency band for a mid-band of NR, and the at least one second NR frequency band may include a frequency band for a high-band of NR.

As described above, a method performed by an electronic device (e.g., the electronic device 101) according to an embodiment may include identifying an anchor antenna of a first antenna (e.g., the first antenna 610) and a second antenna (e.g., the second antenna 620) based on a frequency band of an Long-term evolution (LTE) carrier of EN (Evolved-Universal Terrestrial Radio Access (E-UTRA)-New Radio (NR))-DC (dual connectivity); identifying a frequency band of an New radio (NR) carrier of the EN-DC; identifying an additional antenna for transmitting a signal of the NR carrier of the EN-DC of the second antenna and a third antenna (e.g., the third antenna 630), based on the anchor antenna and the frequency band of the NR carrier; and feeding a signal of the NR carrier of the EN-DC to an NR transmission/reception antenna (e.g., the NR transmission/reception antenna 650) and the additional antenna, wherein the first antenna supports at least one first LTE frequency band, wherein the second antenna supports at least one second LTE frequency band and at least one first NR frequency band, wherein the third antenna supports at least one second NR frequency band, and wherein the NR transmission/reception antenna supports the at least one first NR frequency band and the at least one second NR frequency band.

In an embodiment, when the anchor antenna is the first antenna and the frequency band of the NR carrier of the EN-DC is included in the at least one first NR frequency band, the additional antenna may be the second antenna, when the anchor antenna is the first antenna and the frequency band of the NR carrier of the EN-DC is included in the at least one second NR frequency band, the additional antenna may be the third antenna, and when the anchor antenna is the second antenna, the additional antenna for the NR carrier of the EN-DC may be the third antenna.

In an embodiment, when the frequency band of the LTE carrier of the EN-DC is included in the at least one first LTE frequency band, the anchor antenna may be the first antenna, and when the frequency band of the LTE carrier of the EN-DC is included in the at least one second LTE frequency band, the anchor antenna may be the second antenna.

In an embodiment, the feeding of the signal of the NR carrier of the EN-DC to the NR transmission/reception antenna and the additional antenna may include performing power distribution to the NR transmission/reception antenna and the additional antenna through a switching circuit, the switching circuitry may be connected to the second antenna when the frequency band of the NR carrier is included in the at least one first NR frequency band, and the switching circuitry may be connected to the third antenna when the frequency band of the NR carrier is included in the at least one second NR frequency band.

In an embodiment, a distance between the additional antenna and a camera may be greater than a distance between the NR transmission/reception antenna and the camera.

In an embodiment, a distance between the additional antenna and a grip sensor may be greater than a distance between the NR transmission/reception antenna and the grip sensor.

In an embodiment, when the anchor antenna is the first antenna and the frequency band of the NR carrier is included in the at least one first NR frequency band, the third antenna may be used to receive an NR signal.

In an embodiment, when the anchor antenna is the first antenna and the frequency band of the NR carrier is included in the at least one second NR frequency band, the second antenna may be used to receive an NR signal.

In an embodiment, the at least one first NR frequency band may include a 5G NR band 3 having an uplink frequency range of 1710 MHz (megahertz) to 1785 MHz.

In an embodiment, the at least one first LTE frequency band may include a frequency band for a mid-band of LTE, the at least one second LTE frequency band may include a frequency band for a high-band of NR, the at least one first NR frequency band may include a frequency band for a mid-band of NR, and the at least one second NR frequency band may include a frequency band for a high-band of NR.

Various embodiments of the disclosure provide an electronic device and a method for reducing camera noise and specific absorption rate (SAR) caused when an antenna for an New radio (NR) carrier is positioned at its upper end part. An electronic device and a method according to embodiments of the disclosure makes it possible to reduce an influence due to the camera noise and the SAR and improve the antenna performance, by means of an additional New radio (NR) antenna.

The effects that can be obtained from the disclosure are not limited to those described above, and any other effects not mentioned herein will be clearly understood by those having ordinary knowledge in the art to which the disclosure belongs, from the following description.

The methods according to various embodiments described in the claims and/or specification of the disclosure may be implemented in hardware, software, or a combination of hardware and software.

In case of implementing as software, a computer-readable storage medium for storing one or more programs (software modules) may be provided. The one or more programs stored in the computer-readable storage medium are configured for execution by one or more processors in an electronic device. The one or more programs include instructions that cause the electronic device to execute the methods according to embodiments described in the claims or specifications of the disclosure.

Such a program (software module, software) may be stored in a random access memory, a non-volatile memory including a flash memory, a read only memory (ROM), an electrically erasable programmable read only memory (EEPROM), a magnetic disc storage device, a compact disc-ROM (CD-ROM), digital versatile discs (DVDs), other type of optical storage device, or a magnetic cassette. Alternatively, the program may be stored in a memory composed of a combination of some or all of those. In addition, a plurality of respective constituent memories may be included therein.

Further, the program may be stored in an attachable storage device that may be accessed through a communication network such as e.g., Internet, Intranet, local area network (LAN), wide area network (WAN), or storage area network (SAN), or a combination thereof. Such a storage device may be connected to a device performing an embodiment of the disclosure via an external port. In addition, a separate storage device on the communication network may also access a device performing an embodiment of the disclosure.

In the above-described specific embodiments of the disclosure, an element included in the disclosure is expressed in a singular or plural form depending on a presented specific embodiment. However, the singular form or plural form is selected to better suit its presented situation for the convenience of description, and the disclosure is not limited to that singular element or the plural element presented, and even a component expressed in plural may be configured in a singular form, or even a component expressed in singular may be configured in a plural form.

While the disclosure has been shown and described with reference to specific embodiments thereof, it will be apparent that various changes and modifications are possible without departing form the scope of the disclosure.

## Claims

1. An electronic device comprising:
a wireless communication circuitry for supporting EN (Evolved-Universal Terrestrial Radio Access (E-UTRA)-New Radio (NR))-DC (dual connectivity);
a first antenna for at least one first Long-term evolution (LTE) frequency band;
a second antenna for at least one second LTE frequency band and at least one first New radio (NR) frequency band;
a third antenna for at least one second NR frequency band;
an NR transmission/reception antenna for the at least one first NR frequency band and the at least one second NR frequency band; and
a processor, wherein the processor controls the wireless communication circuitry to:
identify an anchor antenna of the first antenna and the second antenna, based on a frequency band of an LTE carrier of the EN-DC,
identify a frequency band of an NR carrier of the EN-DC,
identify an additional antenna for transmitting an NR carrier signal of the EN-DC of the second antenna and the third antenna, based on the anchor antenna and the frequency band of the NR carrier of the EN-DC, and
provide the NR carrier signal of the EN-DC to the NR transmission/reception antenna and the additional antenna.

2. The electronic device of claim 1,
wherein when the anchor antenna is the first antenna and the frequency band of the NR carrier of the EN-DC is included in the at least one first NR frequency band, the additional antenna is the second antenna,
wherein when the anchor antenna is the first antenna and the frequency band of the NR carrier of the EN-DC is included in the at least one second NR frequency band, the additional antenna is the third antenna, and
wherein when the anchor antenna is the second antenna, the additional antenna for the NR carrier of the EN-DC is the third antenna.

3. The electronic device of claim 1,
wherein when the frequency band of the LTE carrier of the EN-DC is included in the at least one first LTE frequency band, the anchor antenna is the first antenna, and
wherein when the frequency band of the LTE carrier of the EN-DC is included in the at least one second LTE frequency band, the anchor antenna is the second antenna.

4. The electronic device of claim 1, further comprising a switching circuitry for power distribution to the NR transmission/reception antenna and the additional antenna,
wherein when the frequency band of the NR carrier is included in the at least one first NR frequency band, the switching circuitry is connected to the second antenna, and
wherein when the frequency band of the NR carrier is included in the at least one second NR frequency band, the switching circuitry is connected to the third antenna.

5. The electronic device of claim 1, further comprising a camera,
wherein a distance between the additional antenna and the camera is greater than a distance between the NR transmission/reception antenna and the camera.

6. The electronic device of claim 1, further comprising a grip sensor,
wherein a distance between the additional antenna and the grip sensor is greater than a distance between the NR transmission/reception antenna and the grip sensor.

7. The electronic device of claim 1, wherein when the anchor antenna is the first antenna and the frequency band of the NR carrier is included in the at least one first NR frequency band, the third antenna is used to receive an NR signal.

8. The electronic device of claim 1, wherein when the anchor antenna is the first antenna and the frequency band of the NR carrier is included in the at least one second NR frequency band, the second antenna is used to receive an NR signal.

9. The electronic device of claim 1, wherein the at least one first NR frequency band includes a 5G NR band 3 having an uplink frequency range corresponding to a range of 1710 megahertz (MHz) to 1785 MHz.

10. The electronic device of claim 1,
wherein the at least one first LTE frequency band includes a frequency band for a mid-band of LTE,
wherein the at least one second LTE frequency band includes a frequency band for a high-band of NR,
wherein the at least one first NR frequency band includes a frequency band for the mid-band of NR, and
wherein the at least one second NR frequency band includes a frequency band for the high-band of NR.

11. A method performed by an electronic device, comprising:
identifying an anchor antenna of a first antenna and a second antenna based on a frequency band of an Long-term evolution (LTE) carrier of EN (Evolved-Universal Terrestrial Radio Access (E-UTRA)-New Radio (NR))-DC (dual connectivity);
identifying a frequency band of an New radio (NR) carrier of the EN-DC;
identifying an additional antenna for transmitting a signal of the NR carrier of the EN-DC of the second antenna and a third antenna, based on the anchor antenna and the frequency band of the NR carrier; and
feeding a signal of the NR carrier of the EN-DC to an NR transmission/reception antenna and the additional antenna,
wherein the first antenna supports at least one first LTE frequency band,
wherein the second antenna supports at least one second LTE frequency band and at least one first NR frequency band,
wherein the third antenna supports at least one second NR frequency band, and
wherein the NR transmission/reception antenna supports the at least one first NR frequency band and the at least one second NR frequency band.

12. The method of claim 11,
wherein when the anchor antenna is the first antenna and the frequency band of the NR carrier of the EN-DC is included in the at least one first NR frequency band, the additional antenna is the second antenna,
wherein when the anchor antenna is the first antenna and the frequency band of the NR carrier of the EN-DC is included in the at least one second NR frequency band, the additional antenna is the third antenna, and
wherein when the anchor antenna is the second antenna, the additional antenna for the NR carrier of the EN-DC is the third antenna.

13. The method of claim 11,
wherein when the frequency band of the LTE carrier of the EN-DC is included in the at least one first LTE frequency band, the anchor antenna is the first antenna, and
wherein when the frequency band of the LTE carrier of the EN-DC is included in the at least one second LTE frequency band, the anchor antenna is the second antenna.

14. The method of claim 11, wherein the feeding the signal of the NR carrier of the EN-DC to the NR transmission/reception antenna and the additional antenna comprises performing power distribution to the NR transmission/reception antenna and the additional antenna through a switching circuit,
wherein when the frequency band of the NR carrier is included in the at least one first NR frequency band, the switching circuitry is connected to the second antenna, and
wherein when the frequency band of the NR carrier is included in the at least one second NR frequency band, the switching circuitry is connected to the third antenna.

15. The method of claim 11, wherein a distance between the additional antenna and the camera is greater than a distance between the NR transmission/reception antenna and the camera.
